Europäisches Patentamt

**European Patent Office**

Office européen des brevets

(11) Publication number: **0 058 357**
A1

(12) # EUROPEAN PATENT APPLICATION

(21) Application number: **82100847.1**

(22) Date of filing: **05.02.82**

(51) Int. Cl.³: **B 01 D 15/08**
G 01 N 31/04, B 01 J 41/06

(30) Priority: **17.02.81 US 234520**

(43) Date of publication of application:
**25.08.82 Bulletin 82/34**

(84) Designated Contracting States:
**DE FR GB IT NL**

(71) Applicant: THE DOW CHEMICAL COMPANY
Dow Center 2030 Abbott Road Post Office Box 1967
Midland Michigan 48640(US)

(72) Inventor: Stevens, Timothy Sean
5102 Foxcroft
Midland Michigan(US)

(72) Inventor: Langhorst, Martin Albert
2900 Georgetown
Midland Michigan(US)

(74) Representative: Casalonga, Axel et al,
BUREAU D.A. CASALONGA OFFICE JOSSE & PETIT
Baaderstrasse 12-14
D-8000 München 5(DE)

(54) **Improved chromatographic analytical column for anion determination.**

(57) A chromatographic analytical column, containing an agglomerated type anion-exchange packing, comprising:

Component A, which comprises a pressure packed bed of substrate particles of insoluble synthetic resin, having cation-exchanging sites at least on their available surfaces, the particles being of low porosity relative to Component B microparticles, and

Component B, derived by agglomerating microparticles of insoluble synthetic resin onto the pressure packed bed of Component A particles, the microparticles having a volume average diameter of less than 1,500 and greater than 50 Angstroms and having anion-exchanging sites, at least on their outer surfaces, which attract available cation sites of Component A, wherein said microparticles are attached as a monolayer to the available surfaces of the Component A particles.

Fig. 1

IMPROVED CHROMATOGRAPHIC ANALYTICAL COLUMN

FOR ANION DETERMINATION


The invention relates to an improved high performance analytical column containing an anion-exchange chromatographic packing composition of the agglomerated type.

Since the inception of ion chromatography (U.S. Patent 3,920,397, issued to Small et al., November 18, 1975), the basic technology for the anion-exchanger used in the analytical column for anion determination has not changed. Microparticles of anion-exchanger (0.1 to 5μ) are agglomerated with macroparticles (5 to 100μ) of surface sulfonated or fully sulfonated styrene divinylbenzene copolymer to produce a low capacity agglomerated anion-exchanger.

Improvements within this basic technology came with the use of monodisperse anion-exchange latex rather than the previously used ground anion-exchange resin, and by performing the agglomeration step in a polyvalent salt solution (U.S. Patent 4,119,580, issued

0058357

to Smith et al., October 10, 1978). The use of monodisperse anion-exchange latex eliminated the problem of refining ground ion-exchange resin to obtain the desired size range, while agglomerating in a polyvalent salt solution resulted in a reproducible and dense deposition of microparticles due to the resulting suppression of the ionic repulsion forces between the microparticles.

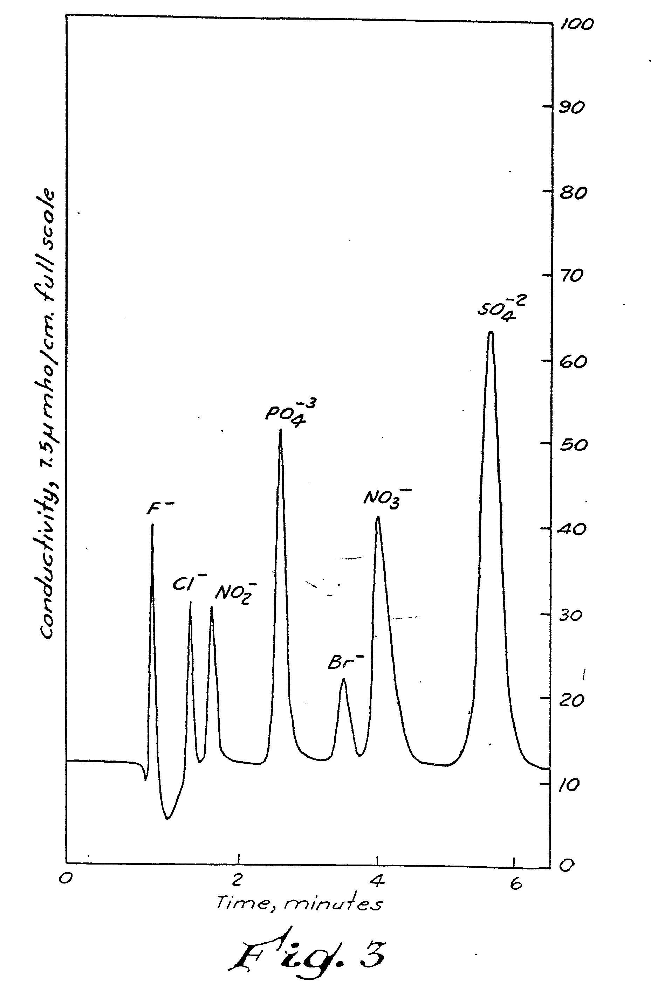

State of the art anion exchangers of this type show a performance level in which baseline separation of fluoride, chloride, nitrite, phosphate, bromide, nitrate, and sulfate anions is achieved in about 20 minutes using a one-half meter column, e.g., as illustrated by the chromatogram of Figure 3 of U.S. Patent 4,119,580, identified above.

The calculated theoretical plate count (N) for the bromide ion in this separation is N = ~650, and for the sulfate ion, N = ~500, using Equation 1, below, and measuring retention time from the leading edge of the fluoride peak to correct for column void volume effects.

Equation 1 $\qquad N = \frac{T^2}{W} \times 16$ = theoretical plate count

$\qquad$ where T = retention time, in minutes

$\qquad$ W = triangulated peak width at baseline, in minutes.

Plate counts of about 650 for a 1/2 meter column are considered quite low by current liquid chromatographic standards, but about as expected for an agglomerated packing (Bulletin No. 123, Whatman Inc.,

29,516-F $\qquad$ -2-

<u>Liquid</u> <u>Chromatographic</u> <u>Product</u> <u>Guide</u>, page 3 (1977)). Today, most liquid chromatography is practiced using the "microparticulate" type of packing, based on 5-10µ porous silica particles, because of their superior efficiencies (sharper peaks). This results in faster analyses, better detection limits, and better separation of interferences. Plate counts of 2,000-10,000 per 250 mm are common for microparticulate packed columns. All other factors the same, a column with four times the plate count will result in a twofold improvement in resolution, with peaks about twice as tall. Thus, performance can be linearly compared by comparing the square root of N.

Based strictly on efficiency criteria, a silica based column would thus appear to be strongly preferred for use in anion analysis versus the current agglomerated form of column. However, prior attempts to use silica-based columns for this application frequently prove unsuccessful, due in part to serious dissolution problems.

The invention is a chromatographic analytical column, the column containing a pellicular type (agglomerated) anion-exchange packing, comprising:

Component A, which comprises a pressure packed bed of substrate particles of insoluble synthetic resin, having cation-exchanging sites at least on their available surfaces, the Component A particles being of low porosity relative to Component B microparticles, described below, and

Component B, derived by agglomerating microparticles of insoluble synthetic resin onto the pressure packed bed of Component A particles, the microparticles having a volume average diameter of less than 1,500 and greater than 50 Angstrom units and having anion-exchanging sites, at least on their outer surfaces, which attract available cation sites of Component A, wherein the microparticles of Component B are attached as a monolayer to the available surfaces of the Component A particles.

The analytical column of the invention has advantages over chromatographic anion-exchangers described in the prior art in that it provides high performance agglomerated anion-exchange resin based columns compared with non-agglomerated packed columns and further in that it may be utilized in strongly basic media which cause silica substrates used in silica based columns to disintegrate.

The invention is better understood by reference to the accompanying drawings, wherein;

Figure 1 is an elevational view of apparatus for preparing pressure packed chromatographic columns in accordance with the principles of this invention;

Figure 2 is a graph which plots theoretically derived analytical column resolution performance, based on varying Component B size, and superimposed with the theoretically derived data are curves plotted based on observed performance, this data being associated with Examples 1 and 2, below; and

Figure 3 reproduces an actual chromatogram developed by the improved high performance analytical column of this invention, and is particularly associated with Example 3, below.

According to the present invention, low porosity substrate particles, typically resin beads, hereinafter Component A, serve to firmly retain coating microparticles (Component B monolayer) which include active anion-exchange sites used for chromatographic separation. Such substrate particles comprise synthetic resin insoluble in the solvent systems used for separation. They are suitably formed of resin beads preferably substantially spherical and from about 5 to about 75 microns diameter and preferably about 5 to about 35 microns. Highly preferred for use in the invention are particles which are from about 5 to about 20 microns in diameter.

Preferred Component A is further characterized as being "monodisperse", meaning that at least about 90 percent and most preferably 95 percent of the particles which compose Component A are within the size range of about 0.5 to 1.5D, wherein (D) is the volume average diameter of the Component A particles. The narrower the size range of Component A, typically the more efficient the chromatographic packing composition of the invention. It is typically preferred to use Component A which meets the stricter requirement of a size range of between about 0.67 to 1.33D wherein 95 percent or greater of the Component A particles fall within this range.

The Component A particles have cation-exchange sites critically on their exterior or outer available surfaces. The cation-exchange sites may be either strong acid in form, generally of sulfonate functional groups; or weak acid in form, generally carboxyl functional groups. The term "cation-exchange sites" is in addition meant to include chelating sites, such as amino carboxylic acid groups, which are attracted to or form coordination complexes with the anion-exchanging sites of Component B.

A wide variety of condensation and addition backbone polymers are known in the art from which may be derived Component A. Examples of these synthetic resins and their preparation are amply described by Wheaton and Hatch in Chapter 6 of "Ion Exchange", Vol. 2, J. Marinsky Ed, New York (1969). For example, synthetic ion exchange resins such as poly(phenolformaldehyde), polyacrylic or polymethacrylic acid or nitrile, amine-epichlorohydrin resins, graft polymers of styrene on polyethylene or polypropylene, poly(2-chloromethyl-1,3-butadiene) and poly(vinyl aromatic) resins such as those derived from styrene, alpha--methylstyrene, chlorostyrene, chloromethylstyrene, vinyltoluene, vinylnaphthalene or vinylpyridine, all of which resins have been suitably cross-linked to render them insoluble in the solvent media with which they will be contacted and which bear desired cation exchanging sites, are suitable synthetic resins from which Component A may be prepared.

The preparation of resins with the mentioned chelating sites is well known in the art, as described by Morris, U.S. Patent No. 2,875,162, issued February 24, 1959, and Mock et al., U.S. Patent No. 2,910,445, issued October 27, 1959.

Highly preferred for use as Component A are the cross-linked poly(vinyl aromatic) resins. Especially suitable are synthetic resin beads of a styrene-divinylbenzene copolymer of the gel type containing about 1/2 percent or greater divinylbenzene ($\frac{1}{2}$%X), the beads being in the surface-sulfonated form and containing about 20 percent or greater divinylbenzene (20%X) for a fully sulfonated form of bead particle.

As mentioned, Component A particles have low porosity relative to the Component B microparticles. "Low porosity" means that minute, discrete pores or channels (to be distinguished from irregular or undulating surface features) which permeate the interior of Component A, as in the case of macroreticular form resins, are insufficient in size to permeate substantial Component B microparticles during the agglomerating process. Low porosity resins particularly will include gel type resins and selected macroreticular form resins having a volume average pore diameter ($D_p$) which is less than a factor of about three times greater than the volume average diameter (D) of the Component B microparticles combined therewith (i.e., the ratio $D_p/D$ is less than ~3).

The term "available surface", as used herein, means that surface of Component A which will come into attaching contact with microparticles of Component B when a pressure packed bed of Component A is contacted with a suspension of Component B microparticles. Because of the low porosity of Component A particles, the term available surface is thus equated with the outer surface area (external skin) of Component A, excluding substantially all minute internal pore created surface areas, (and which outer surface area is contacted by the suspension of Component B microparticles).

The packing used in the improved analytical column of the invention further comprises synthetic resin microparticles, hereinafter Component B, of less than about 1,500 and greater than about 50 Angstrom units volume average diameter; a highly preferred form of which is further characterized as "monodisperse." The latter term particularly refers to Component B microparticles of a volume average diameter (D), wherein no less than about 90 percent of the total volume of same is within the size range of between about 0.5D to about 1.5D. Monodisperse Component B particles (for illustrative purposes), of a volume average diameter of 500 Angstrom units, would thus be composed of microparticles at least about 90 percent of the total volume of which would be within the size range of from about 250 to about 750 Angstrom units. The defined microparticles of Component B form a monolayer on the available surface of Component A. These microparticles have anion-exchanging sites which attract the available sites of Component A.

The material from which the Component B microparticles are derived, are insoluble in the solvents with which they will be contacted. Among suitable backbone materials for Component B are the well-known synthetic polymeric resins mentioned in the description of Component A above and may be of the gel or macroreticular resin type. Preferred for use in Component B are poly(vinyl aromatic) resins; most preferred is an aminated styrene-divinylbenzene copolymer having anion--exchanging sites. The anion-exchanging sites are found at least on the outer surfaces of Component B particles, preferably substantially throughout the entirety of a majority of the particles. The anion--exchange sites may be either strong base, generally quaternary ammonium functional groups; or weak base, generally tertiary, secondary, and primary amine functional groups.

As mentioned above, Component B will comprise microparticles not greater than about 1,500 Angstrom units volume average diameter, preferably, from about 50 to about 900 Angstrom units, more preferably, from about 50 to about 600 Angstrom units volume average diameter, and most preferably from about 50 to about 300 Angstrom units volume average diameter.

The term "volume average diameter" (D) as used herein to describe Component B, when referring to particle size, relates to the statistical distribution of total particle volume with respect to varying particle size. One method used to determine the volume average diameter of microparticles involves determining the statistical median with respect to volume of the range of the particles' diameters.

For larger particles (Component A), "volume average diameter" may be determined, e.g., using a commerical particle size analyzer to supply a 12-channel number distribution over the range of the sensor. Particles in each channel are assumed to be spherical and are assigned an average diameter corresponding to the midpoint of the two channel limits. Using the assigned diameters and the number distribution generated by the instrument, the volume average diameter is determined using the following equation.

$$\text{Vol. Avg. Diameter} = \frac{\Sigma nd^4 *}{\Sigma nd^3}$$

where n = number of particles in the channel
d = diameter of channel

(*For a more detailed description, refer to "Particle Size Measurement", T. Allen, Chapman & Hall, 1974, pg. 85-90.)

The term "volume average pore diameter" $(D_p)$ is well known in the art relating to the statistical distribution of total pore volume of the macroreticular resin with respect to varying pore diameter. The method employed herein for determining "volume average pore diameter" is the known technique of mercury porousimetry as described in "Advanced Experimental Techniques in Powder Metallurgy", Vol. 5, Plenum Press (1970).

The word "diameter" should not be construed as indicating that either Component A or Component B particles are exactly spherical in shape. Photomicrographs indicate the particles described in the Examples below are generally spherical. However, where Component B, for example, is formed from ground anion-exchange resin, projections, edges, or corners are very likely to be present due to the grinding process which may tend to shatter individual ion-exchange resin particles, producing irregular and diverse geometrically shaped particles, intended to be covered within the broad scope of the claimed invention.

Analytical columns conforming to the invention are prepared by first efficiently pressure packing the column with Component A substrate particles, to which is added a suspension of Component B microparticles.

"Pressure packing" means the technique, generally, of packing Component A which is characterized by: (1) delivery by liquid of a slurry or liquid suspension of Component A particles to a chromatographic column; and (2) wherein the delivery liquid is a packing liquid added to the column under high pressure e.g., between about 200-10,000 psig (1,379-68,950 kilopascals) over a prolonged period, to form a generally homogenous packed bed of Component A, the bed being supported and built on a porous element or frit which is permeable to the applied packing liquid.

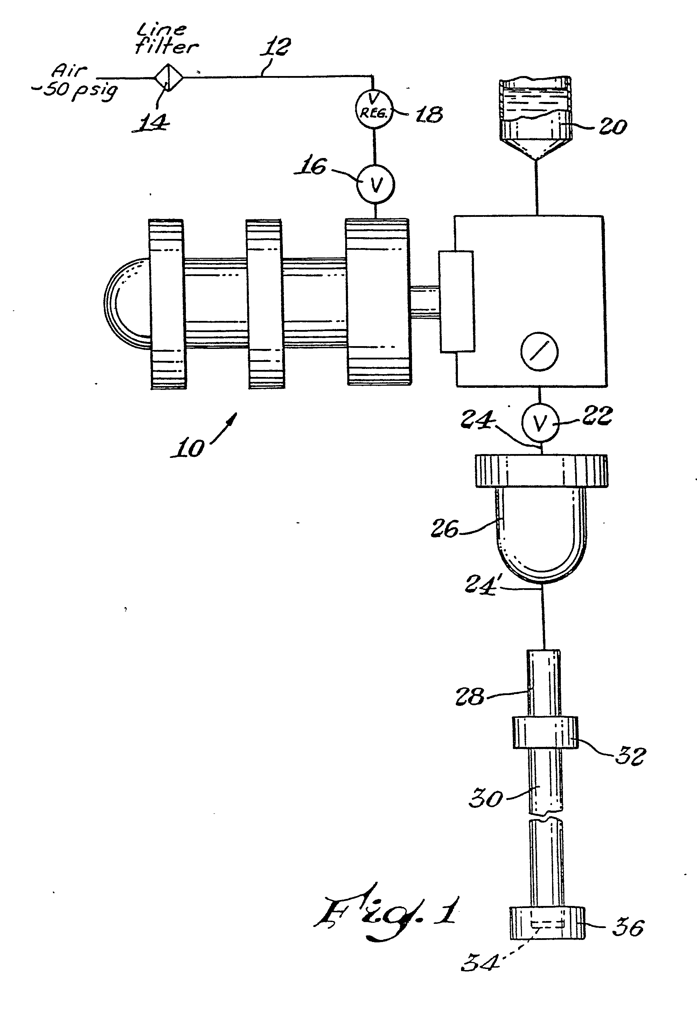

Apparatus useful in preparing a pressure packed bed of Component A is illustrated in Figure 1 and comprises a constant pressure pump designated by reference numeral 10, suitably an air-driven pneumatic amplifier pump. The pump is operated from a compressed air tank through a pneumatic conduit 12, gas filter 14, shut-off valve 16, and gas pressure regulator 18, the latter of which controls the input pressure to pump 10.

Pump 10 is connected to a reservoir 20, from which packing liquid is withdrawn and delivered under controlled pressure through a shut-off valve 22 and tube segment 24 to a second reservoir or slurry reservoir 26. A column extension 28 communicates with slurry reservoir 26 through a tube segment 24'. A chromatographic column 30 (the column to be packed) is removably coupled to column extension 28 by a chromatographic union 32. A frit 34, suitably a porous stainless steel frit with a perimeter ring, is inserted into the extreme lower end of chromatographic column 30 and held by end fitting 36. Suitably, the end fitting 36, column extension 28, and union 32 used and described above are standardized chromatograph parts.

The apparatus is operated by adding to slurry reservoir 26 a quantity of a batch-prepared slurry of Component A, and prefilling chromatographic column 30, column extension 28 and tube segments 24, 24' with packing liquid, making sure to displace all air from the system. Tube segment 24 is then coupled to pump 10, and the pump is operated to deliver packing liquid to the slurry reservoir and ultimately to chromatographic column 30 at a controlled packing pressure over a prolonged period (e.g., at least about 1/2 hour). To avoid disrupting the bed following application of the packing liquid, shut off valve 22 is closed, and with pump 10 so disengaged, the packing pressure is allowed to dissipate slowly, after which chromatographic column 30 is detached and a column inlet frit and end fitting, identical to frit 34 and end fitting 36, attached. The packed bed is then rinsed thoroughly over repetitive periods with eluent to effect a clean-up. A liquid suspension of Component B is then contacted with the packed Component A bed using the in situ agglomeration method described in U.S. Patent No. 4,101,460 issued to Small et al., July 18, 1978, where a monolayer of Component B is formed on the available surface of the pressure packed bed of Component A substrate particles.

Like the packing materials claimed in U.S. Patent 4,101,460, the packing used in the improved columns of the present invention has been found to be remarkably stable. The particles of Component B are irreversibly attached to the available surface of Component A, such that a substantial number of Component B particles will not be displaced from the available surface of Component A by solutions of strong electrolytes or polyelectrolytes. For example, about 0.5 molar and preferably about 1.0 molar sodium hydroxide solution should not displace a substantial number of Component B particles; neither should shearing forces such as those encountered when a liquid passes through an ion-exchange bed at elevated flow rates displace a substantial number of Component B particles.

Experimental

Chromatograph Conditions

The following chromatographic conditions are used to evaluate the packed chromatographic columns described in the Examples, below.

Eluent:  0.0024 molar $Na_2CO_3$ 0.003 molar $NaHCO_3$
Flow Rate:  138 ml/hr
Stripper Column:  2.8 x 300 mm $H^+$ ion form resin, 200-400 mesh
Injection Volume:  50 µl loop
Detection:  7.5 µ mho $cm^{-1}$ full chart deflection

Sample Standard

The following seven-ion standard is used undiluted; as a two-fold dilution; and also as a four-fold dilution.

| | |
|---|---|
| $F^-$ | 3.3 ppm |
| $Cl^-$ | 4 ppm |
| $NO_2^-$ | 10 ppm |
| $PO_4^{3-}$ | 54 ppm |
| $Br^-$ | 10 ppm |
| $NO_3^-$ | 34 ppm |
| $SO_4^{2-}$ | 50 ppm |

The above conditions and standard solutions are widely used for the evaluation of ion chromatographic analytical columns.

### Component B, Latex Synthesis

Component B is derived using the following recipe to synthesize a quaternized vinylbenzyl chloride divinylbenzene copolymer latex of a size of about 200 Angstroms volume average diameter. The use of more or less monomer results in larger or smaller latex. Reducing the charge of sodium persulfate, sodium bicarbonate, sodium lauryl sulfate, and sodium metabisulfite may be practiced to obtain larger sized latex, as is well understood in the art.

### Recipe

1. Add 200 ml deionized water, 3 g sodium persulfate, 3 g sodium bicarbonate and 35 g 30% aqueous solution of sodium lauryl sulfate to a 500 ml round bottom flask, with mixing to dissolve the salts.

2. Place the flask on a rotary evaporator and rotate in an ice bath until a white slush forms (second phase sodium lauryl sulfate). Continue flask rotation to step 7.

3. Add 10 g of vinyl benzyl chloride monomer and 1 g of 50% divinylbenzene monomer to the flask.

4. Add a solution of 2.1 g sodium metabisulfite in 10 ml of deionized water to the flask.

5. Flush the headspace of the flask with nitrogen and cap the system to prevent the intrusion of air.

6. Replace the ice bath with a 32°C water bath and maintain a 32°C temperature for six hours.

7. Filter the resulting latex through Whatman #1 filter paper and add 2.5 g of nonionic surfactant and mix well.

8. Shake the above treated latex with 200 g of ion exchange resin for 10 minutes to remove the sodium lauryl sulfate from solution. Filter on a 400 mesh stainless steel screen.

9. Shake the above treated latex with 200 g of mixed bed ion exchange resin for 10 minutes to demineralize the latex. Filter on a 400 mesh stainless steel screen (at this point, determining latex size).

10. Add 3 ml of 99% dimethylethanolamine to the above treated latex (to prepare Type 2 latex), mix and heat on a steam bath to 70± 5°C for one-half hour. Appropriately, substitute trimethylamine in this step and step 11 to prepare a Type 1 latex. Type 1 latex is preferred for special use, e.g., to achieve a better separation of sulfate from oxalate.

11. Add 17 ml additional 99% dimethylethanolamine in 1-ml portions with mixing over a time span of about 15 minutes. Continue heating for 3 hours. Cool and filter through Whatman #1 filter paper.

12. Filter through a 0.45μ membrane filter and dilute to about 1% polymer solids with 10% sodium carbonate prior to agglomerating the latex with Component A.

Column Packing

Pressure packed analytical columns in the Examples, below, are prepared using as the packing liquid, an aqueous solution of 0.002 molar $Na_2HPO_4$, to which is added a surfactant, suitably 0.2% (w/v) of a polyoxyethylene lauryl ether and additionally to which is added 0.05% (w/v) sodium lauryl sulfate and 0.2% formaldehyde; and adjusted to pH 7.5 by NaOH.

A slurry batch of Component A is prepared by adding 35% cross-linked, fully sulfonated styrene-divinylbenzene beads, 10-20 μ particle size range, to the referenced packing liquid to produce a dilute slurry of approximately 20% solids content (v/v). The volume of the Component A used should approximate twice the volume of the empty column 30. The prepared slurry batch is sonicated for at least 15 minutes to remove entrained gases prior to its addition to slurry reservoir 26.

Columns are each prepared using a packing pressure of about 2,000 psig (13,790 kilopascals), applied for at least 1/2 hour (for columns on the order of 10 cm, and correspondingly longer for longer columns) after which the pressure is allowed to dissipate slowly (preferably at least 4 hours) to avoid disrupting the packed Component A bed. The column is then detached from the packing apparatus, a frit and column end fitting installed, and the column is connected to a chromatographic pump to be rinsed with eluent for 3-4 hours, allowed to set overnight, and then rinsed an additional 3-4 hours.

Anion-exchange latex is agglomerated onto the available surface of the packed Component A bed by

0058357

passing a 1% polymer solids (w/v) suspension of an anion-exchange latex in 10% (w/v) sodium carbonate through the column until an excess is seen emerging. The column is subsequently heated at 55°C in a water bath to promote complete agglomeration followed by rinsing with 10% (w/v) sodium carbonate, and finally by rinsing with the standard eluent solution.

Example 1

Pressure-packed chromatographic columns conforming to the invention are prepared by packing nonagglomerated Component A particles into 4.6 x 70 mm chromatographic columns. Component B in the form of 5% cross-linked Type 2 latex (hereinafter Type 2x5 latex) is agglomerated onto the packed Component A bed. Separate columns are prepared using latex of 535, 910 and 1,500 Angstrom units, respectively, volume average diameter. None of these evaluated columns shows an increase in back pressure after the in situ agglomeration step indicating that there is no column plugging. The observation is also made that the column using the 535Å latex obtains about the same resolution of the seven-ion standard as the 910Å latex column in about 40% less time (with even greater efficiency advantage observed when compared to the 1,500Å latex column). This per-formance is contrary to generally accepted theory (Hansen and Gilbert "Theoretical Study of Support Design For High-Speed Liquid and Ion Exchange Chromatography", Chrom. Sc., August, 1974, p. 464).

This theory of pellicular ion-exchangers is a modification of the Glueckauf equation whereby plate count and resolution are calculated as a function of pellicule depth (thickness of the active ion exchange on the inactive core). Based on this theory, Hansen and Gilbert calculated the optimum pellicule depth for various packing diameters and concluded that the pellicule depth should be about 12000 Angstrom units for a 50μ packing, about 3000 Angstrom units for a 15μ packing, and about 1000 Angstrom units for a 2μ packing (see Table II of this reference).

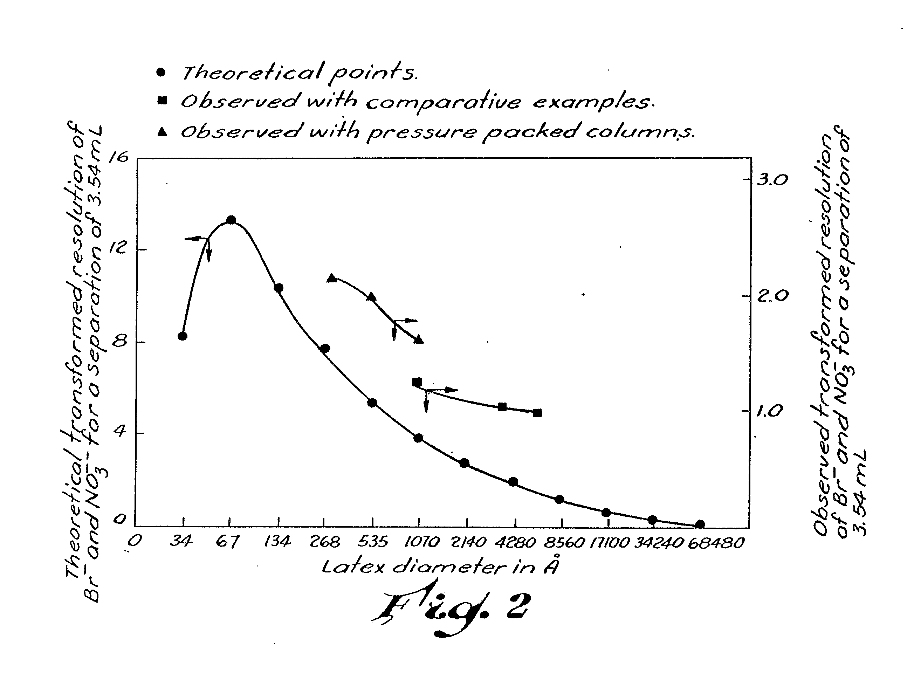

Closer examination of Hansen and Gilbert's work, however, reveals a questionable assignment of variables. Their data are extrapolated from the boundary conditions of a fully functional packing (pellicule depth equal to the radius of the packing) to a packing having the "optimum" pellicule depth of only about 5% of the packing radius. Extrapolating over a very much shorter range based on the observed relative peak retention times ($K_d$) for bromide and nitrate with the agglomerated packing composed of 535 Angstrom units Component B on a 10-20μ Component A substrate (using the herein stated eluent and eluent flow rate), the transformed resolution derived from Equation 3, below vs. pellicule depth curve shown in Figure 2 results. The optimum theoretical Component B size based on these revisions is about 70 Angstrom units as opposed to Gilbert and Hansen's predicted 3000 Angstrom units. In addition, the curve of Figure 2 shows surprisingly that optimum resolution should be expected in the range of from less than about 900 to about 50 Angstrom units, a range unpredicted in the prior referenced patent and literature teachings.

Example 2

Comparison of Different Latex Sizes

In order to experimentally determine optimum Component B size, various pressure packed columns, differing in Component B latex size, are prepared and evaluated using the standard conditions. The resulting data is shown in Table I.

## TABLE I

Comparison of Resolution Between $Br^-$ and $NO_3^-$ For Columns Prepared with Various Latex Sizes

| Latex agglomerated in situ with 10-20µ, Substrate[b] | Column Size | Resolution[a] of $Br^-$ & $NO_3^-$ | Separation of $Br^-$ & $NO_3^-$ |
|---|---|---|---|
| 270Å Type 2x5 | 10x80 mm | 2.10 | 3.45 ml |
| 535Å Type 2x5 | 4.6x70 mm | 0.77 | 0.58 ml |
| 910Å Type 2x5 | 4.6x70 mm | 0.81 | 0.93 ml |
| 3760Å Type 2x5* | 2.8x500 mm | 1.00 | 3.54 ml |
| 6250Å Type 2x5* | 2.8x75 mm | 1.14 | 5.3 ml |

\* Comparative Example (column prepared by the claimed preagglomeration method of U.S. Patent 4,119,580, previously identified). 3760Å latex is on a 50µ substrate.

(a) Resolution, $R = \dfrac{S}{\frac{1}{2}(W_1 + W_2)}$     (Equation 2)

where S = separation, in ml, between peak maximas

W = triangulated peak width at baseline in ml

(b) Fully sulfonated 35% cross-linked styrene divinylbenzene copolymer.

Comparison of column performance is made on the basis of the resolution observed for a given analysis time under standard conditions of eluent composition and flow rate. A column that gives a resolution of 1 and requires an analysis time of 20 minutes is not considered to perform as well as one that takes 10 minutes to give a resolution of 1. In order to more equally evaluate the column performance shown in Table I, the resolutions observed are transformed to the resolution expected for a separation between $Br^-$ and $NO_3^-$ of 3.54 ml, using the following equation.

$$R_{TR} = Ro \frac{3.54}{S} \qquad \text{(Equation 3)}$$

where Ro = resolution observed at separation S

$R_{TR}$ = transformed resolution, expected at a separation of 3.54 ml

The value of S = 3.54 ml is chosen as being the same as is seen with the prior art packing (Figure 3, U.S. Patent No. 4,119,580, previously identified). Table II shows the transformed data.

## TABLE II

Transformed Resolution for a Separation Between
Nitrate and Bromide of 3.54 ml for Columns
Prepared with Various Latex Sizes

| Latex Agglomerated in situ with 10-20µ Substrate | Resulting Column Size | Transformed Resolution of $Br^-$ & $NO_3^-$ | Resulting Separation of $Br^-$ & $NO_3^-$ |
|---|---|---|---|
| 270Å Type 2x5 | 10x82 mm | 2.13 | 3.54 ml |
| 535Å Type 2x5 | 4.6x427 mm | 1.90 | 3.54 ml |
| 910Å Type 2x5 | 4.6x266 mm | 1.58 | 3.54 ml |
| 3760Å Type 2x5* | 2.8x500 mm | 1.00 | 3.54 ml |
| 6250Å Type 2x5* | 2.8x62 mm | 0.99 | 3.54 ml |

* Comparative Example.

The data in Table II are plotted with the theoretical curve for comparison, see Figure 2. Figure 2 also contains data for slurry packed column agglomerated in situ with 910Å Type 2x5 latex (not considered prior art but included for comparative purposes). The observed performance, superimposed with·the curve predicted by the revised theory, indicates agreement with the trend shown by the theoretical calculations. Performance is shown particularly to improve with the use of pressure packed columns vs. the other forms of columns such as those prepared according to U.S. Patent 4,119,580. The most efficient columns are those prepared by pressure packing, and which additionally employed as Component B, smaller latex sizes in the range of from about 900 Angstrom units to about 50 Angstrom units.

Example 3

Illustrative Chromatogram

A 4.6x140 mm column is pressure packed with fully sulfonated 10-20µ styrene-divinylbenzene 35 percent crosslinked Component A and agglomerated with 535Å Type 2x5 latex as previously described. Figure 3 shows a reproduction of the chromatogram developed by the column using the standard conditions and a four-fold dilution of the seven-ion standard. The chromatogram compares very favorably with that reproduced as Figure 3 of U.S. Patent 4,119,580, previously identified. Importantly, an analysis time of about 6 minutes is required for a near baseline resolution of the seven-ion standard. This compares with an analysis time of about 20 minutes with the referenced prior art chromatogram (Figure 3 of U.S. Patent 4,119,580) in which there was used the same eluent composition and eluent flow rate.

Example 4

Column Geometry and Back Pressure

A disadvantage with the use of smaller packing size is increased back pressure. Most ion chromatographs are limited to a 500 psig (3447 kilopascals) maximum pressure and the 4.6 mm I.D. columns packed with fully sulfonated 10-20µ styrene-divinylbenzene 35 percent crosslinked Component A gave back pressure well in excess of 500 psig (3447 kilopascals) for column lengths needed for a 10 or 20 minute analysis of the seven-ion standard (two-fold dilution). For example, the back pressure on a 4.6x430 mm column is about 2,000 psig (13,790 kilopascals). In order to reduce back pressure, a 10x100 mm pressure packed column is prepared according to the invention, having about the same column volume as the 4.6x430 mm column. This larger bore column shows a back pressure of only about 200 psig (1379 kilopascals) and results in near equivalent performance to the smaller bore column; i.e., a theoretical plate count according to Equation 1 of 3620 for the bromide ion peak and 2850 for the sulfate ion peak vs. respective values of 4000 and 3140 for the 4.6x430 mm column.

<u>Claims</u>

1.  A chromatographic analytical column, the column containing a pellicular type (agglomerated) anion-exchange packing, comprising:

Component A, which comprises a pressure packed bed of substrate particles of insoluble synthetic resin, having cation-exchanging sites at least on their available surfaces, the Component A particles being of low porosity relative to Component B microparticles, described below, and

Component B, derived by agglomerating microparticles of insoluble synthetic resin onto the pressure packed bed of Component A particles, the microparticles having a volume average diameter of less than 1,500 and greater than 50 Angstrom units and having anion-exchanging sites, at least on their outer surfaces, which attract available cation sites of Component A, wherein the microparticles of Component B are attached as a monolayer to the available surfaces of the Component A particles.

2.  The analytical column of Claim 1 in which the volume average diameter of the microparticles is not greater than 900 Angstrom units.

3.  The analytical column of Claim 1 comprising component A consisting essentially of monodisperse particles of insoluble synthetic resin of 5 to 75 microns diameter.

4. The analytical column of Claim 3 comprising Component B consisting essentially of monodisperse microparticles of insoluble synthetic resin, the volume average of which is not greater than about 900 Angstrom units.

*Fig. 1*

# Fig. 2

Latex diameter in Å

Theoretical transformed resolution of Br⁻ and NO₃⁻ for a separation of 3.54 mL

Observed transformed resolution of Br⁻ and NO₃⁻ for a separation of 3.54 mL

● Theoretical points.

■ Observed with comparative examples.

▼ Observed with pressure packed columns.

0058357

Fig. 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 246 302 (DOW) *Page 1, line 1 - page 4, line 38; page 14, example 6; page 15, example 7* & USA 4101460 (SMALL) (Cat. D) | 1-4 | B 01 D 15/08 G 01 N 31/04 B 01 J 41/06 |
| Y | FR-A-2 240 450 (DOW) *Page 15, lines 8-34; page 30, example 2* & USA 3920397 (SMALL) (Cat. D) | 1 | |
| Y | US-A-3 488 922 (KIRKLAND) *Column 4, lines 24-58; column 9-10, claims* | 1-4 | |
| P | US-A-4 252 644 (SMALL) *Columns 17-18; claims* | 1-4 | TECHNICAL FIELDS SEARCHED (Int. Cl. ³) |
| D,A | US-A-4 119 580 (SMITH) ----- | | B 01 D G 01 N B 01 J |

The present search report has been drawn up for all claims

| Place of search | Date of completion of the search | Examiner |
|---|---|---|
| THE HAGUE | 14-05-1982 | WENDLING J.P. |